# EUROPEAN PATENT APPLICATION

(11) **EP 4 447 388 A1**
(43) Date of publication of application: **16.10.2024**
(21) Application number: 23168116.4
(22) Date of filing: 14.04.2023
(51) Int. Cl.: H04L 12/18

(54) **METHOD FOR AUTOMATICALLY CONFIGURING MULTICAST FORWARDING BETWEEN NETWORK PARTICIPANTS OF AN INDUSTRIAL NETWORK**

(71) Applicant: ABB SCHWEIZ AG, 5400 Baden (CH)
(72) Inventor: SCHULZ, Dirk, 67149 Meckenheim (DE)
(74) Representative: Maiwald GmbH

(57) **Abstract**

The invention provides a computer-implemented method for automatically configuring multicast forwarding between network participants of an industrial network on a need-to-know basis, the method comprising automatically generating one or more directed multicast trees.

## Description

### FIELD OF THE INVENTION

The invention pertains to a computer-implemented method for configuring multicast forwarding between participants of an industrial network, a computing system, a computer program product, and a computer-readable medium.

### BACKGROUND

Multicasting has become an essential network function for industrial networks. However, presently it is implemented with relatively low security efforts. For example, being in a multicast group allows not just sending but also receiving all traffic, management protocols require no authentication and management traffic is not encrypted. Some network configuration functions as currently implemented even rely on the low security, for example for being able to snoop management traffic for configuration purposes.

This leaves unacceptable points of attack, particularly during initial device and service discovery and operational closed-loop control signal traffic. Accordingly, as an example, multicasting as presently implemented stands in the way of potential zero-trust networking (ZTN) architectures.

Thus, there is a need to increase security in multicasting schemes for industrial networks. Thus, it is an object of the present invention to provide a method that allows for multicasting between network participants of an industrial network that provides increased security.

### SUMMARY

The object is achieved by the present invention. The invention provides a method, computing system, computer program product, and computer-readable medium according to the independent claims. Preferred embodiments are laid down in the dependent claims.

In particular, the invention provides a computer-implemented method for automatically configuring multicast forwarding between network participants of an industrial network on a need-to-know basis, the method comprising automatically generating one or more directed multicast trees.

According to the present disclosure, the configuring of the multicast forwarding may comprise using the directed multicast tree for determining at least part of a configuration of the network, for example, configuration of one or more switches.

As will be outlined in more detail below, the methods of the present disclosure allow for increasing security without impeding operation of required network functions, e.g. network functions in terms of discovery and network configurations and functions related to operational traffic. For example, the introduced changes to the traffic forwarding are transparent from the perspective of the concerned/intended subscribers. A possible (intended) consequence may be that parties that do not need to know might realize that they never receive anything, and the same goes for IGMP snooping functions.

The term "multicast forwarding" may refer to forwarding traffic, for example bootstrapping and/or operation traffic, according to a multicasting scheme. Multicast forwarding, may, for example, be considered to entail a routing protocol where data transmission is addressed to a group of destination/receiver devices.

A multicast forwarding scheme may be represented by one or more multicast trees. For example, the trees represent the flow of traffic in the network. According to the present disclosure, configuring multicast forwarding comprises generating one or more directed multicast trees. The term "directed multicast trees" is to be understood broadly and may refer to a multicast tree that is a direct tree.

Configuring multicast forwarding may comprise configuring one or more devices of the industrial network that are involved in forwarding traffic throughout the network. The configuring of one or more devices may, for example, comprise configuring switches, where the configuring of the switches implements traffic forwarding rules. Alternatively or in addition, the configuring multicast forwarding may comprise defining authentication requirements.

The term "generating" (directed multicast trees) is to be understood broadly. Generating a multicast tree may comprise determining the network participants associated with the multicast forwarding, determining their respective role or roles in the multicast forwarding, and/or determining rules for forwarding traffic from and to each of them or groups of them.

As will be understood from the description below, generating the multicast tree may, for example, comprise generating switching rules for switches of the industrial network, the switching rules specifying how traffic is forwarded by the respective switch.

In case the configuring is intended to yield a two-way forwarding of traffic, for example because an application or protocols includes both publisher and subscriber roles for a network participant, two or more directed multicast trees may be provided.

It is to be understood that the claim does not require that a single data structure that is representative of a multicast tree is created or stored. That is, for example, the generating of a directed multicast tree may be implemented by generating and storing rules for forwarding traffic that reflect the multicast tree, particularly distributed storing rules for forwarding traffic that reflect the multicast tree.

The term "industrial network" is to be understood broadly and may entail a plurality of networked devices employed for controlling plant operation of an industrial plant. The industrial network may, for example, be or comprise a distributed control system (DCS).

The term "network participant" may refer to any of the networked devices of the industrial network, for example, any entity having the ability to receive or transmit traffic in the industrial network. For example, it may comprise networking devices, switches, routers, firewalls, servers, workstations, IPCs, edge nodes, controllers, I/O devices, sensors, actuators, industrial robots, AGVs, drones, embedded devices, mobile devices, smart helmets, smartphones, tablets, and/or devices configured to carry out services associated with the industrial network.

The term "forwarding on a need-to-know basis" may refer to forwarding multicast network traffic in such a manner that it is ensured that it only reaches network participants intended as recipients, for example network participants subscribing to the traffic and/or authorized as recipients of the traffic and/or networking devices employed for forwarding the traffic and/or discovery servers and/or authentication servers. That is, forwarding multicast traffic on a need-to-know basis may comprise forwarding only to network participants that have objective justification to receive said multicast traffic, yet preventing forwarding of said multicast traffic to all other network participants. As an example, in particular, this may entail preventing network participants from listening in on multicast traffic that is not directed at them. This breaks with common concepts that often require snooping as discussed in more detail below.

It will be understood that the present method allows for avoiding impeding operation. That is, the interoperability for the protocol that use multicasting is maintained and no implementation has to be changed.

The method as described above provides increased security, in particular, by multicasting on a need-to-know basis, e.g., rather than all members of a group being able to send traffic and receive all traffic. To that end the method of the present disclosure employs one or more directed multicast trees. Said trees allow for reliable and granular traffic separation without compromising the nature of multicasting.

As will be described in more detail below, depending on the context of the multicast traffic, different specific embodiments describe employing this method for improving security in the context of specific network functions, particularly in a bootstrapping context and in a operational traffic context.

As such, the claimed method provides is a versatile way to improve security of multicasting over a wide range of potential applications of multicasting in an industrial network.

The method of the present disclosure may, advantageously, be applied in a OPC UA. The method may be used for multi-cast-DNS (mDNS) service discovery.

The method of the present disclosure may be implemented employing standardized data-plane programmability.

The method of the present disclosure may employ standardized authentication methods for centralized admission control to multicasting, particularly on the data-plane.

According to the present disclosure, the automatically configuring may comprise distinguishing, among the network participants, between a publisher role and a subscriber role and determining distinct forwarding rules taking into account said roles so a publisher reaches subscribers, but only restrictedly reaches other publishers.

Publisher role and subscriber role may also be referred to as talker role and listener role, respectively. A network participant is referred to as a publisher when having a publisher role. A network participant is referred to as subscriber when having a subscriber role. A network participant may, for different multicasts, have different roles.

A network participant may, for some multicast traffic, have a subscriber role, while for other multicast traffic, it may have a publisher role. In such a case, separate multicast forwarding trees reflecting the two directions of multicast traffic flow may be generated.

By differentiating between the roles, it can be clearly distinguished, within a group of network participants, whether multicast traffic may reach the respective network participants. As an example, it can be avoided that network participants listen in on multicast traffic not directed at them.

According to the present disclosure, automatically configuring multicast forwarding for bootstrap traffic may comprise defining policies that allow publishers to reach only discovery servers, in particular by configuring switches of the network to forward multicast messages only to one or more discovery servers.

Bootstrapping may relate to bootstrapping the network, its devices, and services. Bootstrapping may include a variety of protocols and applications that may or may not rely on multicasting such as discovery (e.g. using mDNS), address assignment (e.g. using DHCP), name resolution (e.g. using DNS), or authentication (e.g. using IEEE802.1X in conjunction with RADIUS). The intention of bootstrapping is to establish secure control over system resources by discovering, authenticating, and appropriating them. This is a prerequisite to then continue the network configuration for domain-specific applications such as process control, which are project-/plant-/site-specific, and may themselves again make use of multicasting (e.g. OPC UA publish/subscribe).

During bootstrapping, multicasting is advantageous, for example for service discovery. However, security risks open up when publishers can reach all other network participants prior to authentication and/or authorization. As such, providing an intermediary, in this case the discovery servers, allows for mitigating the risks. Reach, in this particular example, is to be understood as "directly reach".

That is, the discovery servers may have functionalities allowing to forward all or at least some of the received traffic if needed. For example, a discovery server may leverage a functionality of a separate server and, for the purpose of leveraging this functionality, may forward at least part of the received traffic to said separate server. As one example, this may increase flexibility in terms of authentication and/or authorization. For example, a discovery server may leverage an authentication and/or authorization functionality of a separate server, e.g., an authentication server, and, for the purpose of leveraging this functionality, may forward at least part of the received traffic to said separate server.

It is noted that herein, the term "multicast message" may be used synonymously with "multicast traffic". A message need not have any specific format, but merely serves as a way to distinguish between portions of multicast traffic.

According to the present disclosure, particularly for bootstrap traffic, automatically configuring multicast forwarding may comprise configuring switches of the network, for example using switch forwarding tables. In particular, the switch may use a selectable set or subset of header data, wherein the selectable set or subset comprises at least parts of one source indicator in addition to at least parts of one destination multicast address, and optionally internal management data of the switch to match incoming traffic to be forwarded. For example, each switch might be configured with different granularity of identifying data streams, e.g. even for the same application. Alternatively, a decision which set or subset of header data to use may be taken globally for the application.

The above applies for L2 (Layer 2) bridge, L3 (Layer 3) bridges, etc.. TSN or OpenFlow switches allow more than L2 switching and go into basic routing functionality as well.

Thus, some or all of the header data may be used for matching incoming traffic to be forwarded. It is not necessary to use all of the header data and not even necessarily an entire field or an entire address. As an example, a matching mask may be used.

As seen above, the selectable set or subset of header data used to match incoming traffic to be forwarded comprises a source indicator and the destination address. The source indicator may take any suitable form, e.g., Ingress Port, Source MAC Address, Source IP Address.

"Matching" incoming traffic, in this context, may be understood as using the selectable set or subset of header data and optionally internal management data of the switch (networking device) to determine actions for the incoming traffic, the actions, for example, including forwarding the traffic to a specific destination. For example, the switch (networking device) may use its internal management data including e.g. traffic counters for individual streams or stream groups. This is particularly applicable where there is a certain statefulness for traffic.

An exemplary, non-limiting, list of header data includes Source Mac Address, Source IP Address, Source Port, Destination Mac Address, Destination IP Address, Destination Port, TTL, EthernType, Protocol Number, VLAN ID, Priority, or the like.

According to the present disclosure, particularly for bootstrap traffic, the method may further comprise using additional header data and/or internal management data to restrict the multicast tree so as to further minimize mutual exposure between publishers. As an example, a switch may be configured to use more data than just the source indicator and the destination address for matching incoming traffic to be forwarded. Alternatively, multiple switches, e.g. subsequent switches, may be configured such that, together, they use more data than just the source indicator and the destination address for matching incoming traffic to be forwarded.

According to the present disclosure, the method may comprise automatically generating at least two directed multicast trees using the same multicast group address, wherein one of the at least two directed multicast trees implements the distribution of requests of one participant of the network participants and one of the at least two directed multicast trees implements a collection of responses to said participant.

Thus, for example, a two-way flow of traffic may be achieved without creating additional exposure. This is a particularly important scenario in industrial networks, as communications will often require multicasting requests and receiving responses. It can be avoided that the responses will reach undesired network participants by using a separate directed multicast tree. For example, not all recipients of the request should necessarily be able to listen in on all responses to the request. It also allows for having multiple publishers reaching the same subscriber, e.g., by sub-grouping subscribers, as described below.

According to the present disclosure, in particular, the at least two directed multicast trees may be configured to allow for a discovery server to multicast a request to other network participants and for one or more of the other network participants to respond to the request.

For example, there may be one directed multicast tree directing the request from the discovery server to the network participants and, for each of the other network participant, there may be a directed multicast tree directing the response to the request to the discovery server and/or any other network participants that are intended to receive the response.

Alternatively or in addition, the at least two directed multicast trees may allow for sub-grouping publishers in such a manner that network traffic from all publishers in a sub-group are forwarded to the same destination network participant to optimize the number of entries in the forwarding tables of switches without compromising on traffic confidentiality.

According to the present disclosure, automatically configuring multicast forwarding for operational traffic may comprise authenticating, e.g. by a central authority, potential publishers and subscribers of a multicasting group and configuring switches to forward multicasting messages only to one or more predefined multicast addresses associated with the authenticated publishers and subscribers of the multicasting group. In particular, authenticating may comprise employing an authentication and group key management functionality that authorizes configuring switches to forward multicasting messages only to one or more predefined multicast addresses associated with a security group and requiring that publisher and subscriber have authenticated and received a security key for the security group.

According to the present disclosure, each authentication method may be configured to support a secure resolution of the secure identity used to authenticate the publishers and subscribers to address information like source MAC or IP address.

According to the present disclosure, automatically configuring multicast forwarding may comprise configuring switches of the network using switch forwarding tables.

According to the present disclosure, the network may comprise multiple switches and automatically configuring multicast forwarding may comprise configuring the switches based on a switching table comprising distinct entries for each of multiple publishers within the same multicast group by using their source MAC or IP addresses or respective ingress ports of the switch in addition to destination address information, the entries defining respective forwarding actions for forwarding multicast messages from each respective publisher of the multicast group. That is, in other words, stacked entries may be used (rather than using a wildcarding approach).

According to the present disclosure, the method may comprise leveraging application and/or service knowledge to distinguish between multicasting for bootstrapping traffic and operation traffic and, based thereon, performing multicasting configuration associated with secure bootstrapping protocols and sequences and awaiting the completion of bootstrapping for devices and services prior to performing multicast configuration associated with operational protocols used by said devices and services.

This further improves security.

According to the present disclosure, the method may comprise detecting traffic flow identification capabilities of networking equipment, authenticating multicast group participants, and configuring the multicast forwarding between the group participants on the finest granularity supported by the networking equipment forwarding tables.

As an example, a switch may be capable of using IP target addresses in addition to MAC addresses to identify streams and make forwarding decisions. In that case, the fine granularity supported by the networking equipment forwarding tables may be improved in case a container runtime environment uses dedicated IP addresses for each container but attaches to the network using one network interface with one MAC address.

The above allows for advantageously employing the networking equipment's capabilities in such a manner as to allow for both, high functionality and high security.

According to the present disclosure, the method may comprise, for each device and/or service of the network, checking if all conditions for group admission are met, in particular using network-level authentication as a condition for group admission to an application/operational bootstrapping group for bootstrapping traffic and/or using authentication and/or security key possession as a condition for group admission to an application and/or service group for operational traffic. The method may further comprise, for each device and/or service that meets the condition for group admission, determining forwarding rules for networking equipment, e.g. one or more switches, defining forwarding actions of multicast messages from publishers to subscribers, in particular using the most fine-granular traffic flow identification supported by the networking equipment.

According to the present disclosure, defining the forwarding rules may comprise defining, particularly per port, matching rules on header and/or payload data and defining forwarding actions, particularly including forwarding multicast messages only to ports through which an authenticated subscriber is reached.

As will be understood from the above, the present disclosure, for example by combining central authentication facilities (secure discovery using e.g., OPC UA GDS and key server) with central network control (SDN including e.g., a TSN CNC), secure network device configuration (e.g., using NETCONF), and fine-granular traffic separation (e.g., using OpenFlow matching tables or TSN streams) may provide zero-trust multicasting for industrial networks. The present method can be implemented based on open standards and with no inconvenience for the applications.

The present disclosure, as an example, allows for multicasting support in industrial networks, e.g., as a feature for application protocols. Multicasting may be used to support application redundancy with OPC UA publish/subscribe, which is particularly advantageous in the context of service discovery, e.g., as part of OPC UA part 14.

As will be understood from the foregoing, the present disclosure particularly allows for secure multicasting, including on a data-plane. As an example, the present disclosure may leverage software-defined networking approaches to auto-configure multicasting in the forwarding functions of the network data plane.

According to the present disclosure, for protocols used in bootstrapping networks, devices, and services, a list of intended listeners handling part of the bootstrap process and general policies that allow talkers to be bootstrapped to reach those predefined listeners are defined. For example, switches may be configured on the network to forward mDNS (as an example identified by 01:00:5E:00:00:FB and 224.0.0.251 multicast addresses) only to an OPC UA Global Discovery Server (GDS). Thus, in this example, none of the talkers are mutually exposed to the multicast messages or can even register to receive those. Devices that are still in the early stages of bootstrapping and have not been fully authenticated, thus, have no way of discovering potential attack targets on the network.

For protocols used for operational traffic, multicast membership may be awarded based on authentication by a group key management or an equivalent functionality. For example, switches are configured to forward traffic for a particular multicast address used by OPC UA publish/subscribe traffic only if both publisher and subscriber have been authenticated by the GDS and have successfully received the security key for the corresponding SecurityGroup using the corresponding multicast address.

In a preferred embodiment, streams containing multicast IP traffic are identified using destination MAC and IP address alongside protocol port number.

As will also be understood from the foregoing, the present disclosure provides a method that allows for achieving a securable, resource-optimized, and seamless configuration of a network to forward multicast traffic with service-granularity while remaining transparent to the multicast talkers and listeners.

In this context, "securable" may refer to the option to use mutual authentication of talkers, listeners, network controllers, and networking equipment, and further encrypting the exchanged management to (de)register interest and (re)configure the networking equipment.

Moreover, in this context, "resource-optimized" may refer to traffic only ever being forwarded to interested listeners.

Moreover, in this context, "seamless" may refer to switching, routing, firewall, or gateway functions being configured as part of an integrated method that is transparent to the hosts (or services).

Moreover, in this context, "service-granularity means that multicast traffic can be filtered on the level of individual application services, e.g., not only per host on layer 2 or 3.

As an example, the method of the present disclosure may detect the traffic identification capabilities of the networking equipment, authenticate multicast group participants, and configure multicast forwarding on the finest granularity supported by the networking equipment between authenticated group participants.

The present method provides improved granularity of forwarding. The present method may only forward exactly the data for one service using multicasting and nothing else.

The present method allows for incorporating authentication, thereby improving security. For example, authentication of group members by an application/bootstrap protocol may be a precondition to automatically configure the low-level network forwarding.

As will be understood from the present disclosure, advantages of plug and produce and application redundancy for system availability and productivity can be provided at minimal security exposure. This closes a gap that PnP and application redundancy today have on low-level networking. The attack surface of the automation network is minimized beyond the admission control of perimeter security, and this may be accomplished using standardized mechanisms even in those cases where the network is used to multiply traffic as part of a redundancy scheme and especially in the early stages of system bootstrapping when the system is potentially most vulnerable.

As will also be understood from the above, the present disclosure allows for reducing attack surfaces, particularly during the initial device and service discovery and operational closed-loop control signal traffic. This makes the method of the present disclosure suitable for zero-trust networking (ZTN) architectures.

The present disclosure also provides use of the methods of the present disclosure in a network having a ZTN architecture.

The invention also provides a computing system configured to carry out any of the methods of the present disclosure.

The invention also provides a computer program product comprising instructions which, when the program is executed by a computer, cause the computer to carry out any of the methods of the present disclosure.

The invention also provides a computer-readable medium comprising instructions which, when executed by a computer, cause the computer to carry out any of the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
- Figure 1: illustrates a schematic representation of an industrial network;
- Figure 2: is a flowchart illustrating methods according to the present disclosure;
- Figure 3: illustrates an example for a network according to the present disclosure;
- Figure 4: illustrates bootstrapping for a network according to the present disclosure
- Figure 5: illustrates configuring multicast traffic for operational traffic according to the present disclosure;
- Figure 6: illustrates an example of multicast aggregation in an intermediate switch according to the present disclosure.

### DETAILED DESCRIPTION

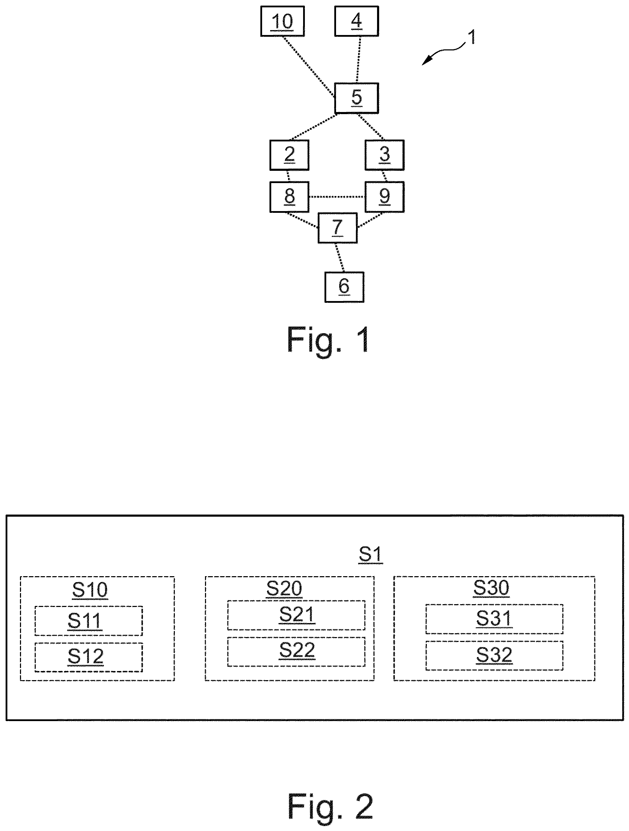

Figure 1 illustrates an exemplary industrial network 1, in which the method of the present disclosure may be used. The network shown in Figure 1 comprises multiple network participants 2 to 9. The participants may comprise, among others, devices 2, 3 of the plant configured to carry out services, a network controller 4, networking devices 5, a discovery server 6, switches 7, 8, and 9, and an authenticating registry 10.

Figure 2 illustrates methods for automatically configuring multicast forwarding between network participants of an industrial network on a need-to-know basis according to the present disclosure, the method comprising step S1 of automatically generating one or more directed multicast trees.

As illustrated by the dashed box, the automatically configuring may comprise distinguishing, in step S11, among the network participants, between a publisher role and a subscriber role and determining, in step S12, distinct forwarding rules taking into account said roles, so a publisher reaches subscribers, but only restrictedly reaches other publishers.

As illustrated by dashed box S20, the method may comprise automatically configuring multicast forwarding for bootstrap traffic, wherein automatically configuring multicast forwarding for bootstrap traffic comprises defining, in step S21, policies that allow publishers to reach only discovery servers, in particular by configuring switches of the network to forward multicast messages only to one or more discovery servers. Automatically configuring multicast forwarding may comprise step S22 of configuring switches of the network using switch forwarding tables, particularly using a selectable set or subset of header data comprising at least one source indicator in addition to at least one destination multicast address and/or internal management data of the networking device to match incoming traffic to be forwarded.

As illustrated by dashed box S30, the method may comprise automatically configuring multicast forwarding for operational traffic. Automatically configuring multicast forwarding for operational traffic comprises authenticating, in step S31, e.g. by a central authority, potential publishers and subscribers of a multicasting group and configuring, in step S32, switches to forward multicasting messages only to one or more predefined multicast addresses associated with the authenticated publishers and subscribers of the multicasting group. An authentication and group key management functionality that authorizes configuring switches to forward multicasting messages only to one or more predefined multicast addresses associated with a security group and requiring that publisher and subscriber have authenticated and received a security key for the security group may be employed. The automatically configuring multicast forwarding may comprise configuring switches of the network using switch forwarding tables. Each authentication method may support a secure resolution of the secure identity used to authenticate the publishers and subscribers to address information like source MAC or IP address.

In the following additional background, examples and advantages will be outlined in detail.

With OPC UA publish/subscribe or multicast-DNS (mDNS) for service discovery, multicasting will be an essential networking feature in the future DCS. However, standard multicasting management is lacking security concepts, leading to unacceptable attack surfaces toward future zero-trust networking (ZTN).

Presently, by default, multicast traffic is broadcast to all hosts in a broadcast domain. To reduce the load on the network, there are management protocols so hosts can register interest in traffic using a specific multicast address. This means that hosts not participating in this management scheme will not receive any multicast traffic at all.

Presently, the security around multicasting is rather poor. As an example, being in a multicast group allows not just sending but also receiving all traffic. Contrary to the methods proposed by the present disclosure, as an example, talker and listener roles are not distinguished, management protocols require no authentication, and management traffic is not encrypted. The latter is presently even required so switches can snoop management traffic and self-configure. Furthermore, multicasting used in discovery protocols like mDNS by its very nature is intended to go across the entire network, thus exposing every host or giving it access to all other hosts, respectively. Toward zero-trust networking (ZTN) architectures, this leaves unacceptable attack surfaces, particularly during the initial device and service discovery and operational closed-loop control signal traffic.

While there are mitigation approaches, these approaches still simply accept security gaps on layers 2 and 3 and include management to mitigate the risk only on the layers above. For example, using group key management (e.g., RFC 6407 or OPC 10000-14) may allow the confidential transport of the application payload through symmetric encryption. However, there remain security attacks, so such mitigating approaches cannot be accepted as a ZTN solution.

Thus, while multicasting is an essential network function, there is a need to eliminate security gaps.

Potential active management of multicast forwarding to address this issue, e.g., by minimizing the network exposure, would only allow for coarse granularity and the related management protocols are not secure.

As outlined above, the present disclosure allows for secure multicasting, including on a data-plane.

### Example 1

The following detailed example shows a concrete embodiment, which is however understood to be non-limiting.

The example is explained presuming a discovered network, for example supporting the transmission of IEEE 802.1 Ethernet frames and/or RFC 791 / RFC 4291 IP communication, where, for the networking equipment, it has been determined on which granularity it supports stream/flow identification.

For each device or service, the method may entail checking if a condition for group admission is met, e.g.:
- for device bootstrapping/discovery groups, using e.g., IEEE 802.1X or other methods using EAP-TLS authentication as condition.
- for application/service groups, using e.g., OPC UA 10000-21 authentication or OPC UA 10000-14 key server access as condition.

For authenticated sets of devices/services belonging to a group, forwarding rules may be determined/calculated for the networking equipment leading from multicast talkers to listeners using the most fine-granular stream/flow identification supported by the networking equipment. Creating forwarding rules for a device may include defining a matching rule on header or payload data, including but not limited to an IP route, a firewall rule, a TSN stream identifier or OpenFlow flow table entry including actions as preferred options, and/or defining a layer 3 switching rule or a source and/or destination MAC filter list.

Catching rules may be defined per port (layer 1 or 2 network interface).

The actions may include forwarding only to those ports where an authenticated listener for the multicast group can be reached.

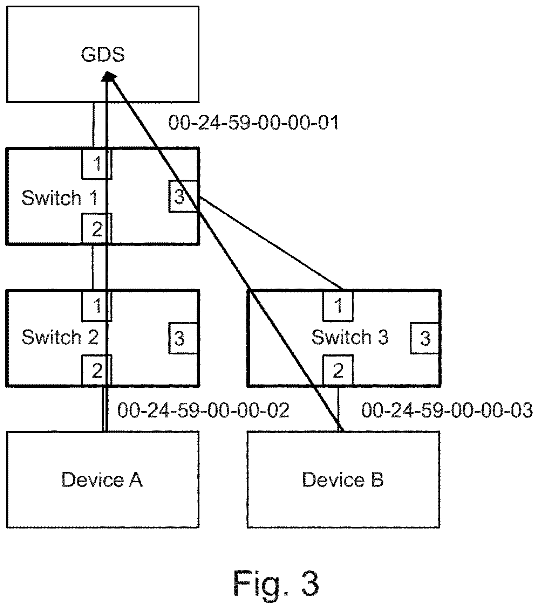

Further examples are provided below making reference to Figures 3 to 6.

### Example 2

Figure 3 shows an example network where it is ensured that only the GDS learns about OPC UA device announcements via mDNS. In this example, central knowledge of the device MAC addresses through LLDP discovery is presumed, but this information could also come from other sources, e.g., from 802.1X authentication or an offline device BOM or engineering data.

Table 1, inserted below, shows how according to the state of the art, multicasting may either act like broadcasting or the destination MAC address gathered during IGMP/MLD snooping may be used to filter/forward multicast frames on Ethernet switches. However, any host can register to send into or receive frames within this group. Source MAC addresses are not checked. In application scenarios such as discovery with e.g., mDNS, this basically leads to multicasting being equivalent to broadcasting again, because every host is intended to be discoverable and no traffic optimization or exposure minimization of any sort occurs.

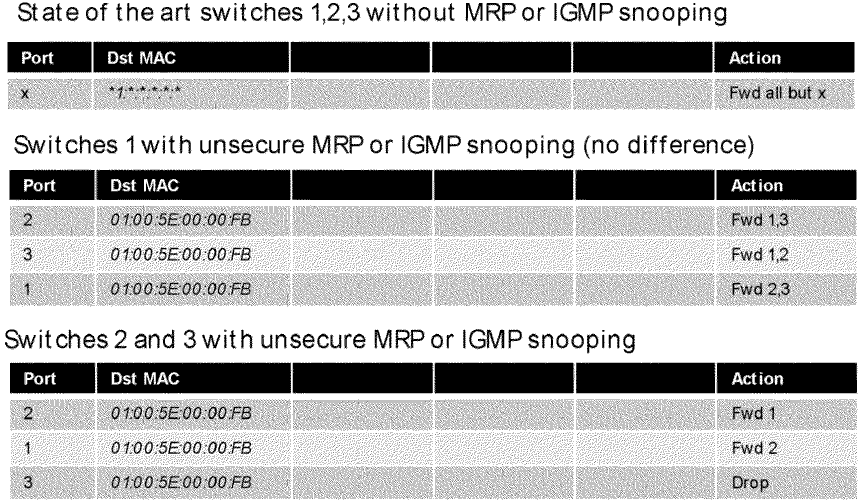

### Table 1 Forwarding configurations based on state of the art

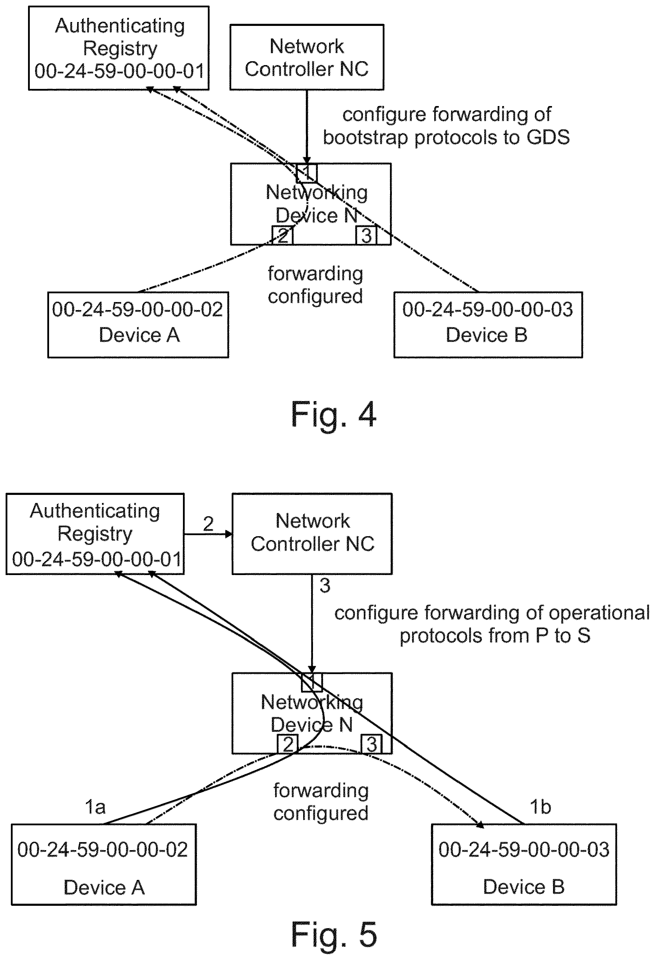

The inventors found that using VLANs is no suitable solution, either. First, because they are symmetric between all hosts, and talkers and listeners are not distinguished. Secondly, because port-based VLANs generally are not suited to separate traffic of different services into multiple VLANs without the added use of layer 3 switching (for which there is no integrated configuration scheme like IGMP or MLD), and device-side VLAN-tagging (if supported) has no security mechanisms. Figure 4 shows how the present example, using an SDN network architecture, may predefine forwarding for bootstrap multicast traffic in the example network of Figure 3 without any necessary interaction by the potential multicast talkers/publishers. Figure 4 illustrates system and method allowing to configure multicast traffic for bootstrapping (logical interaction).

Table 2, inserted below, shows a possible resulting configurations of switch forwarding tables of the example network leveraging TSN combined destination MAC and IP stream identification methods. This restricts multicast forwarding exactly to mDNS from network attached devices to a central GDS server and back. In particular, also source MAC addresses are checked.

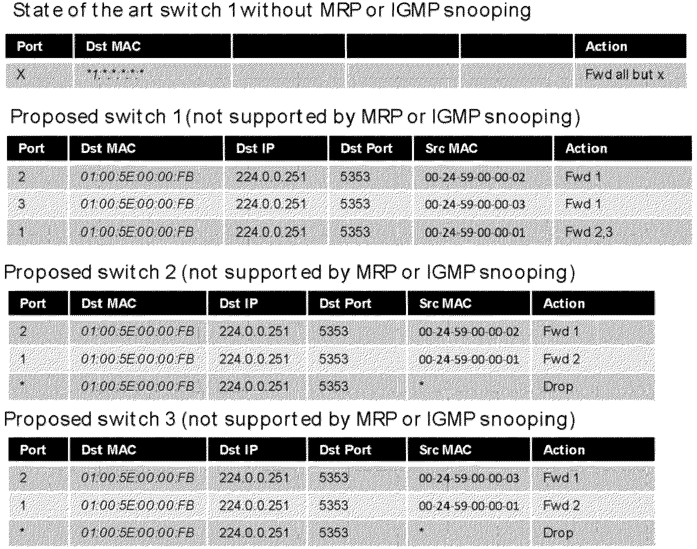

Based on the mDNS discovery, Figure 5 shows an exemplary system and method for configuring multicast traffic for operational traffic (logical interaction), e.g. for example the network in Figure 3, for example with OPC UA pub/sub, using 239.0.0.2 as one arbitrary assigned multicast IP address and its standard-conforming mapping onto a multicast MAC address. The networking device N, in this example, is only configured to forward (OPC UA pub/sub) multicasting from device A to B after both A and B have been authenticated by the central registry, e.g. an OPC UA GDS using OPC 10000-21.

Table 3, inserted below, shows possible resulting forwarding configurations for operational multicasting based on the proposed method (showing only switch 1 as an example), which, in this example, uses source and destination addresses alongside the UDP port.

### Proposed switch 1

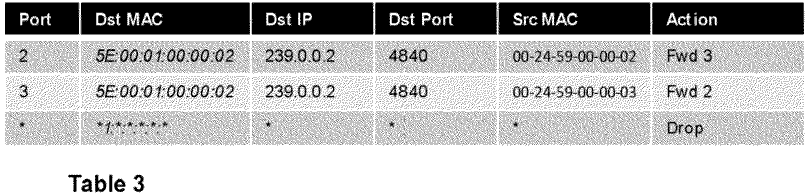

The above example could be extended by using the source IP address in the forwarding rules, particularly in cases where multiple virtual hosts can be reached behind the same MAC address. Traffic-wise, typical automation devices will have a one-to-one mapping of MAC to IP address, but the level of security could still be raised. For hosts such as edge nodes, where multiple virtual hosts can be reached behind the same MAC address, using the source IP address in the forwarding rules is strongly preferred.

### Example 3

This example illustrates how granularity can be maintained under traffic aggregation by means of the present disclosure.

In switches forwarding traffic from multiple publishers within the same multicast group, the source MAC or IP address could be wildcarded or two distinct entries could be added, the latter being preferable in terms of granularity.

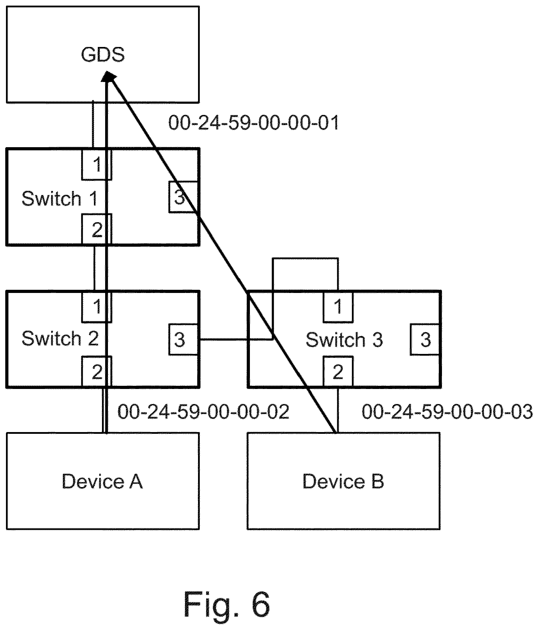

Figure 6 shows an example of multicast aggregation in an intermediate switch. For example, presuming that switch 3 port 1 is connected rather to switch 2 port 3 (not switch 1 port 3) as shown in Figure 6, two examples how to set the forwarding table are shown in Table 4, inserted below. Table 4 shows stacking entries as opposed to wildcarding for an aggregating switch. Stacking individual entries is more secure, but also consumes tablespace. Wildcarding has the risk of allowing an address space that is too large when source addresses are not similar because a pattern must be found that includes at least all source addresses. Solutions with multiple closely fitted wildcard entries are conceivable but complex to administer and not guaranteed to exist.

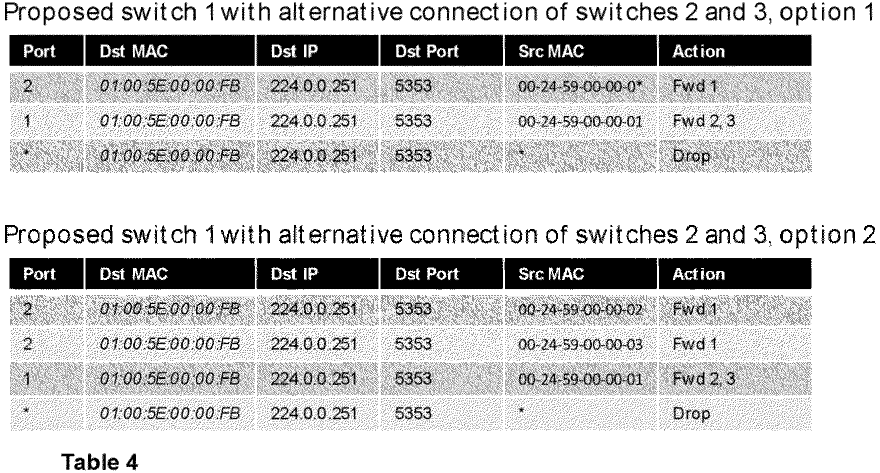

### Further examples, features, and advantages

Initial 802.1X authentication may be carried out to open a port and trigger entries in the forwarding tables.

Multiple receivers of discovery data may be added, e.g., a redundant GDS instance.

To be interoperable with devices expecting to use IGMP, MLD, or MRP, the backend of the snooping/configuring software functions may be extended to make use of the device authentication state (e.g. from GDS, RADIUS, etc.).

The method may be applied to network bootstrapping itself, forwarding of DHCP requests and NETCONF access to extract LLDP data, authenticate devices, and update security credentials.

Similar forwarding entries may be aggregated as outlined above, giving a limit on the degree of aliasing, e.g. how many unwanted streams would be forwarded by wildcarding/matching-masks compared to the number of intended streams.

According to the present disclosure, the roles of talker and listener for multicasting may be distinguished. Thus, the method allows for preventing that "necessary talking" automatically implies being able to "eavesdrop" on all other conversations.

According to the present disclosure, it may not be the device that "decides" its group membership, but a central, secure authority, for example unlike the state of the art around IGMP, MDS, or MRP.
- While a central authorization check could be added to IGMP, this would still transparently expose IGMP traffic on the network (for snooping by an attacker), it would mean that the legitimate need to participate in multicasting already is known (so the request in unnecessary), and it still would not ensure authenticity of the requester (allowing impersonation).
- The proposed method also goes beyond centralized IGMP/MLD snooping, which might rely on a secure device configuration mechanism such as NETCONF but would still be missing requester authentication.

The method according to the present disclosure may be composed from different standards, each as a building block that is superior to the corresponding functionality within IGMP, MRP, or IGMP snooping individually. In particular:
- Standardized data-plane programmability as introduced by OpenFlow or TSN may be employed with superior granularity and built-in security of the configuration method.
- The method may leverage application/service knowledge in the system to distinguish between multicasting required during network and device bootstrapping (e.g., discovery) and multicasting for operational traffic (e.g., content distribution).
- The method may comprise admission control to the multicast data-plane using standardized authentication methods (e.g., TLS/EAP-TLS).

The method of the present disclosure Overcomes restrictions of VLANs and MAC filters, leveraging in particular the prioritization between partly overlapping matching rules in forwarding tables as introduced e.g., by Open Flow.

The method of the present disclosure does not require firewalls in between layer 2 equipment.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for automatically configuring multicast forwarding between network participants of an industrial network on a need-to-know basis, the method comprising automatically generating (S1) one or more directed multicast trees.

2. The method of claim 1, wherein the automatically configuring comprises distinguishing (S11), among the network participants, between a publisher role and a subscriber role and determining (S12) distinct forwarding rules taking into account said roles so a publisher reaches subscribers, but only restrictedly reaches other publishers.

3. The method of any of the preceding claims, comprising automatically configuring (S20) multicast forwarding for bootstrap traffic, wherein automatically configuring multicast forwarding for bootstrap traffic comprises defining policies (S21) that allow publishers to reach only discovery servers, in particular by configuring switches of the network to forward multicast messages only to one or more discovery servers, particularly wherein bootstrapping traffic is traffic associated with bootstrapping the network, its devices, and services.

4. The method of claim 3, wherein automatically configuring multicast forwarding comprises configuring (S22) switches of the network using switch forwarding tables, particularly using a selectable set or subset of header data comprising at least parts of one source indicator in addition to at least parts of one destination multicast address, and optionally internal management data of the switch to match incoming traffic to be forwarded, in particular each switch being configured with different granularity or a decision which set or subset of header data to use being taken globally.

5. The method of claim 4, wherein the method further comprises using additional header data and/or internal management data to restrict the multicast tree so as to further minimize mutual exposure between publishers.

6. The method of any of the preceding claims, wherein the method comprises automatically generating at least two directed multicast trees using the same multicast group address, wherein one of the at least two directed multicast trees implements the distribution of requests of one participant of the network participants and one of the at least two directed multicast trees implements a collection of responses to said participant.

7. The method of claim 6, in particular,
wherein the at least two directed multicast trees allow for a discovery server to multicast a request to other network participants and for one or more of the other network participants to respond to the request, and/or
wherein the at least two directed multicast trees allow for sub-grouping publishers in such a manner that network traffic from all publishers in a sub-group are forwarded to the same destination network participant to optimize the number of entries in the forwarding tables of switches without compromising on traffic confidentiality.

8. The method of any of the preceding claims, comprising automatically configuring (S30) multicast forwarding for operational traffic, wherein automatically configuring multicast forwarding for operational traffic comprises authenticating (S31), e.g. by a central authority, potential publishers and subscribers of a multicasting group and configuring (S32) switches to forward multicasting messages only to one or more predefined multicast addresses associated with the authenticated publishers and subscribers of the multicasting group, in particular, employing an authentication and group key management functionality that authorizes configuring switches to forward multicasting messages only to one or more predefined multicast addresses associated with a security group and requiring that publisher and subscriber have authenticated and received a security key for the security group.

9. The method of claim 8,
wherein automatically configuring multicast forwarding comprises configuring switches of the network, particularly using switch forwarding tables, and/or
wherein each authentication method supports a secure resolution of the secure identity used to authenticate the publishers and subscribers to address information like source MAC or IP address.

10. The method of any of the preceding claims, wherein the network comprises multiple switches and automatically configuring multicast forwarding comprises configuring the switches based on a switching table comprising distinct entries for each of multiple publishers within the same multicast group by using their source MAC or IP addresses or respective ingress ports of the switch in addition to destination address information, the entries defining respective forwarding actions for forwarding multicast messages from each respective publisher of the multicast group.

11. The method of any of the preceding claims, comprising leveraging application and/or service knowledge to distinguish between multicasting for bootstrapping traffic and operation traffic and, based thereon, performing multicasting configuration associated with secure bootstrapping protocols and sequences and awaiting the completion of bootstrapping for devices and services prior to performing multicast configuration associated with operational protocols used by said devices and services.

12. The method of any of the preceding claims, comprising detecting traffic flow identification capabilities of networking equipment, authenticating multicast group participants, and configuring the multicast forwarding between the group participants on the finest granularity supported by the networking equipment forwarding tables.

13. The method of any of the preceding claims, wherein the method comprises,
for each device and/or service of the network, checking if all conditions for group admission are met, in particular using network-level authentication as a condition for group admission to an application/operational bootstrapping group for bootstrapping traffic and/or using authentication and/or security key possession as a condition for group admission to an application and/or service group for operational traffic; and
for each device and/or service that meets the condition for group admission, determining forwarding rules for networking equipment, e.g. one or more switches, defining forwarding actions of multicast messages from publishers to subscribers, in particular using the most fine-granular traffic flow identification supported by the networking equipment.

14. The method of claim 13, wherein defining the forwarding rules comprises defining, particularly per port, matching rules on header and/or payload data and defining forwarding actions, particularly including forwarding multicast messages only to ports through which an authenticated subscriber is reached.

15. A computing system (1) configured to carry out the method of any of the preceding claims.

16. A computer program product comprising instructions which, when the program is executed by a computing system, cause the computing system to carry out the method of any of claims 1 to 14, or
a computer-readable medium comprising instructions which, when executed by a computing system, cause the computing system to carry out the method of any of claims 1 to 14.
